# EUROPEAN PATENT APPLICATION

(11) **EP 4 572 270 A1**
(43) Date of publication of application: **18.06.2025**
(21) Application number: 22958012.1
(22) Date of filing: 30.12.2022
(51) Int. Cl.: H04L 27/26

(54) **TIME-FREQUENCY SYNCHRONIZATION METHOD AND APPARATUS, AND DEVICE, STORAGE MEDIUM AND READABLE INSTRUCTION PRODUCT**

(30) Priority: 09.09.2022 CN 202211102158
(71) Applicant: Comba Network Systems Company Limited, Guangzhou, Guangdong 510663 (CN)
(72) Inventor: ZHONG, Jiaye, Guangzhou, Guangdong 510663 (CN); YANG, Zi, Guangzhou, Guangdong 510663 (CN); LIU, Yongqin, Guangzhou, Guangdong 510663 (CN); YU, Jitao, Guangzhou, Guangdong 510663 (CN)
(74) Representative: Murgitroyd & Company
(86) International application number: PCT/CN2022/144256
(87) International publication number: WO 2024/051056

(57) **Abstract**

A time-frequency synchronization method includes: determining a first frequency domain signal and a synchronization signal block, SSB, index based on a carrier frequency band corresponding to a signal received by a distributed antenna system, DAS, near-end device; determining a demodulation reference signal, DMRS, estimated frequency offset and a channel estimation matrix based on the first frequency domain signal and the SSB index; determining, based on the DMRS estimated frequency offset and a blind frequency offset compensation value, an oscillator offset; determining a first time domain position difference between a primary synchronization signal, PSS, correlation peak and a system frame header based on the first frequency domain signal and the channel estimation matrix; and performing time-frequency synchronization based on the oscillator offset and the first time domain position difference.

## Description

### CROSS-REFERENCE TO RELATED APPLICATIONS

This application claims priority to Chinese Patent Application No. 202211102158.0, filed with CNIPA on September 09, 2022 and entitled "TIME-FREQUENCY SYNCHRONIZATION METHOD AND APPARATUS, DEVICE, STORAGE MEDIUM, AND PROGRAM PRODUCT", the entire contents of which are incorporated herein by reference.

### TECHNICAL FIELD

The present application relates to a time-frequency synchronization method, a time-frequency synchronization apparatus, a device, a storage medium, and a program product.

### BACKGROUND

In recent years, digitalization of Distributed Antenna System (DAS) products has become a mainstream trend because of the advancement of digital signal processing technology and the numerous benefits brought by processing in digital domain. Digital DAS products will be a crucial wireless communication coverage product in the era of 5th-Generation Mobile Communication Technology (5G).

For digital DAS products, how to perform time-frequency synchronization of the received signal over air interface has always been a topic of discussion. Time-frequency synchronization is one of the important guarantees for physical layer processing in communication systems. Time-frequency synchronization means that the receiver analyzes and processes a received signal to recover the clock timing and frequency of an original transmitted signal.

In conventional technology, digital DAS products usually adopt hardware synchronization circuits to achieve time-frequency synchronization. However, hardware synchronization circuits may increase the construction overhead, and when technology evolves, the relevant circuits must be altered to accommodate upgrades, which further increases operational and maintenance costs. In addition, existing time-frequency synchronization methods cannot maintain accurate time-frequency synchronization under conditions of relatively poor signal quality.

### SUMMARY

A time-frequency synchronization method, a time-frequency synchronization apparatus, a device, a storage medium, and a program product are provided in accordance with various embodiments disclosed in the present application.

A time-frequency synchronization method includes:
determining a first frequency domain signal and a synchronization signal block (SSB) index based on a carrier frequency band corresponding to a signal received by a distributed antenna system (DAS) near-end device;
determining a demodulation reference signal (DMRS) estimated frequency offset and a channel estimation matrix based on the first frequency domain signal and the SSB index;
determining an oscillator offset based on the DMRS estimated frequency offset and a blind frequency offset compensation value;
determining a first time domain position difference between a primary synchronization signal (PSS) correlation peak and a system frame header based on the first frequency domain signal and the channel estimation matrix; and
performing time-frequency synchronization processing based on the oscillator offset and the first time domain position difference.

A time-frequency synchronization apparatus includes:
a first determination module, adapted to determine a first frequency domain signal and a synchronization signal block (SSB) index based on a carrier frequency band corresponding to a signal received by a distributed antenna system (DAS) near-end device;
a second determination module, adapted to determine a demodulation reference signal (DMRS) estimated frequency offset and a channel estimation matrix based on the first frequency domain signal and the SSB index;
a third determination module, adapted to determine an oscillator offset based on the DMRS estimated frequency offset and a blind frequency offset compensation value;
a fourth determination module, adapted to determine a first time domain position difference between a primary synchronization signal (PSS) correlation peak and a system frame header based on the first frequency domain signal and the channel estimation matrix; and
a synchronization module, adapted to perform time-frequency synchronization processing based on the oscillator offset and the first time domain position difference.

A distributed antenna system (DAS) device includes a memory and one or more processors. The memory stores computer-readable instructions. The computer-readable instructions, when executed by the one or more processors, cause the one or more processors to perform:
determining a first frequency domain signal and a synchronization signal block (SSB) index based on a carrier frequency band corresponding to a signal received by a distributed antenna system (DAS) near-end device;
determining a demodulation reference signal (DMRS) estimated frequency offset and a channel estimation matrix based on the first frequency domain signal and the SSB index;
determining an oscillator offset based on the DMRS estimated frequency offset and a blind frequency offset compensation value;
determining a first time domain position difference between a primary synchronization signal (PSS) correlation peak and a system frame header based on the first frequency domain signal and the channel estimation matrix; and
performing time-frequency synchronization processing based on the oscillator offset and the first time domain position difference.

One or more non-transitory computer-readable storage media are provided, storing computer-readable instructions thereon. The computer-readable instructions, when executed by one or more processors, cause the one or more processors to perform:
determining a first frequency domain signal and a synchronization signal block (SSB) index based on a carrier frequency band corresponding to a signal received by a distributed antenna system (DAS) near-end device;
determining a demodulation reference signal (DMRS) estimated frequency offset and a channel estimation matrix based on the first frequency domain signal and the SSB index;
determining an oscillator offset based on the DMRS estimated frequency offset and a blind frequency offset compensation value;
determining a first time domain position difference between a primary synchronization signal (PSS) correlation peak and a system frame header based on the first frequency domain signal and the channel estimation matrix; and
performing time-frequency synchronization processing based on the oscillator offset and the first time domain position difference.

A program product includes computer-readable instructions. The computer-readable instructions, when executed by a processor, implement:
determining a first frequency domain signal and a synchronization signal block (SSB) index based on a carrier frequency band corresponding to a signal received by a distributed antenna system (DAS) near-end device;
determining a demodulation reference signal (DMRS) estimated frequency offset and a channel estimation matrix based on the first frequency domain signal and the SSB index;
determining an oscillator offset based on the DMRS estimated frequency offset and a blind frequency offset compensation value;
determining a first time domain position difference between a primary synchronization signal (PSS) correlation peak and a system frame header based on the first frequency domain signal and the channel estimation matrix; and
performing time-frequency synchronization processing based on the oscillator offset and the first time domain position difference.

Details of one or more embodiments of the present application can be reflected in following descriptions in conjunction with the accompanying drawings. Other features and advantages of the present application will become apparent in light of the specification, the accompanying drawings, and the claims.

### BRIEF DESCRIPTION OF THE DRAWINGS

To further clarify technical solutions in embodiments of the present application, accompanying drawings to be used in the embodiments are briefly introduced below. It is obvious that the accompanying drawings in the following description are only for some embodiments of the present application. Other accompanying drawings can be obtained according to these drawings for the person of ordinary skill in the field without putting in creative labor.
FIG. 1 illustrates an application scenario of a time-frequency synchronization method according to one or more embodiments;
FIG. 2 is a schematic flowchart of a time-frequency synchronization method according to one or more embodiments;
FIG. 3 shows another schematic flowchart of a time-frequency synchronization method in an embodiment;
FIG. 4 schematically shows the PSS correlation peak, the system frame header, the local frame header, and the local frame tail according to one or more embodiments;
FIG. 5 shows another schematic flowchart of a time-frequency synchronization method in an embodiment;
FIG. 6 shows a schematic flow of PBCH processing according to one or more embodiments;
FIG. 7 is a schematic diagram of an SSB pattern according to one or more embodiments;
FIG. 8 shows another schematic flowchart of a time-frequency synchronization method according to an embodiment;
FIG. 9 shows another schematic flowchart of a time-frequency synchronization method according to an embodiment;
FIG. 10 shows a schematic diagram of a structure of a time-frequency synchronization apparatus according to one or more embodiments; and
FIG. 11 shows a schematic diagram of a structure of a DAS device according to one or more embodiments.

### DETAILED DESCRIPTION OF THE EMBODIMENTS

To make the technical solutions and advantages of the present application clearer and more understandable, the following further describes the present application in detail according to embodiments in conjunction with the accompanying drawings. It should be understood that the specific embodiments described herein are merely for explaining the present application and rather than limiting the present application.

In recent years, digitalization of DAS products has become a mainstream trend because of the advancement of digital signal processing technology and the numerous benefits brought by processing in digital domain. Digital DAS offer several benefits, including support for higher spectral bandwidths, more advanced modulation manners, increased operator channels, and more flexible network deployment options, thus these have led to growing adoption by manufacturers. Especially in the 5G era, where air interface losses of signals are greater and each site can cover a smaller area, which means that operators are required to deploy more sites, significantly increasing the cost of network deployment. In order to reduce network deployment costs, operators are increasingly adopting co-construction and sharing operational models. Meanwhile, with the gradual deployment of millimeter wave technology in the future, the demand for co-construction and sharing will increase even further. Therefore, digital DAS products are expected to play a very important role in wireless communication coverage products in the 5G era.

For digital DAS products, how to perform time-frequency synchronization of the received signal over the air interface has been a topic of discussion. Time-frequency synchronization means that the receiver analyzes and processes the received signal to recover the clock timing and frequency of an original transmitted signal. Frequency synchronization aims to eliminate frequency difference caused by the transmission process, which is mainly caused by the Doppler frequency shifts resulting from mobility and frequency offsets due to the difference in oscillators between the transmitter and the receiver. Time synchronization refers to recovering the precise position of the frame header at the receiver. Time-frequency synchronization is one of the critical guarantees for physical layer processing in the communication systems, therefore, how to restore time-frequency synchronization quickly and efficiently is of great significance not only for digital DAS, but also for the whole communication system.

In traditional technology, digital DAS products usually use hardware synchronization circuits to achieve time-frequency synchronization. However, hardware synchronization circuits not only increase the production costs of digital DAS products, but also require modifications to the corresponding hardware synchronization circuits to complete the product upgrades when the technology advancements necessitate product upgrades, thereby increasing the upgrade costs. It is evident that the product costs of traditional technology are relatively high.

Time-frequency synchronization method, apparatus, device, storage medium, and program product provided by embodiments of the present application include the following steps: determine a DMRS estimated frequency offset, a blind frequency offset compensation value, and a first time domain position difference between a PSS correlation peak and a system frame header by performing data processing according to a carrier frequency band of a signal received by a DAS near-end device, and determine an oscillator offset based on the DMRS estimated frequency offset and the blind frequency offset compensation value, and then perform time-frequency synchronization processing based on the oscillator offset and the first time domain position difference. It is evident that, compared with traditional technologies that use hardware synchronization circuits, the embodiment of the present application realizes the time-frequency synchronization of the DAS devices through software methods, which can eliminate the need for additional hardware synchronization circuits and reduce the product costs of the DAS devices. Moreover, the frequency synchronization by means of combining the DMRS estimated frequency offset and the blind frequency offset compensation value can improve the accuracy of the frequency compensation in scenarios with low signal-to-noise ratio (SNR) and large frequency offsets. In addition, low-complexity frame synchronization can be achieved by time synchronization through the first time domain position difference between the PSS correlation peak and the system frame header.

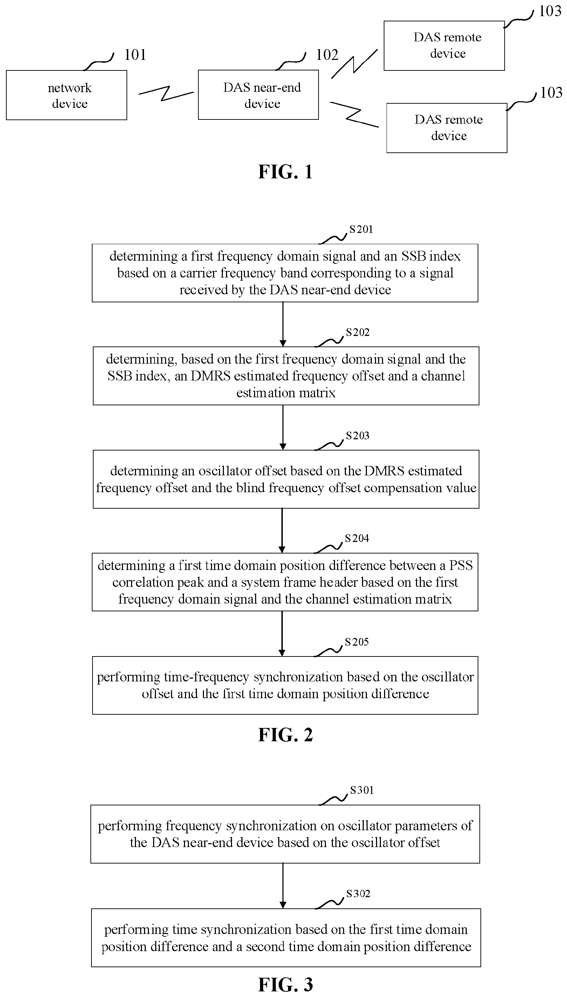

FIG. 1 illustrates an application scenario of the time-frequency synchronization method according to this embodiment of the present application. As shown in FIG. 1, a communication system implementing the time-frequency synchronization method can include: a network device 101, a DAS near-end device 102, and at least one DAS remote device 103. The DAS near-end device 102 is used for performing time-frequency synchronization on a first radio frequency signal received through the air interface using the time-frequency synchronization method provided by this embodiment. The DAS near-end device 102 distributes the processed first radio frequency signal after time-frequency synchronization to one or more DAS remote device 103. Each DAS remote device 103 then converts the received signal into a second radio frequency signal for further transmission. Here, the first radio frequency signal can originate from the network device 101.

For example, the DAS remote device 103 can perform signal gain processing on the received signal through a signal gain module, and then convert it into a second radio frequency signal through a radio frequency processing module for transmission. Of course, the DAS remote device 103 can also transmit the received signal in other ways, which is not limited in the embodiment of the present application.

Certainly, the communication system can also include other devices, and this embodiment of the present application does not impose any specific limitations on this aspect.

In the embodiment of the present application, an entity that performs the method on the DAS near-end device side can be the DAS near-end device or an equipment within the DAS near-end device (it should be noted that it is exemplarily described in the embodiment of the present application that the method is performed by the DAS near-end device). For example, the equipment within the DAS near-end device could be a system-on-chip (SoC), a circuit, or a module, etc., and the present application does not impose specific limitations on this.

The DAS near-end device involved in the embodiment of the present application can include, but is not limited to, a Building Base band Unit (BBU).

The DAS remote device involved in the embodiment of the present application can include, but is not limited to, a Remote Radio Unit (RRU).

The network device involved in the embodiment of the present application can include, but is not limited to, a base station, a transmission reception point (TRP). The base station, which is also referred as a radio access network (RAN) equipment, is a device which accesses terminals to a wireless network. It can be a base transceiver station (BTS) in global system of mobile communication (GSM) or code division multiple access (CDMA), or a node B (NB) in wideband code division multiple access (WCDMA), or an evolutional node B (eNB or eNodeB) in long term evolution (LTE), or a relay station or an access point, or a gNodeB (gNB) in 5G networks, etc., which is not limited herein.

FIG. 2 is a schematic flowchart of the time-frequency synchronization method according to an embodiment of the present application. For the purposes of explanation, the method is described as being applied to the DAS near-end device depicted in FIG. 1. As shown in FIG. 2, the method according to the embodiment of the present application can include following steps.

Step S201: determining a first frequency domain signal and a synchronization signal block (SSB) index based on a carrier frequency band corresponding to a signal received by the DAS near-end device.

In this step, the DAS near-end device can obtain the first frequency domain signal by performing a first data processing according to the carrier frequency band corresponding to the signal received through the air interface (also referred to as a first radio frequency (RF) signal). The first data processing can include: down-conversion process, primary synchronization signal (PSS) positioning process, blind frequency offset compensation process, and frequency-domain transformation process. Of course, the first data processing can also include other processing steps as required, and the embodiment of the present application does not impose specific limitations on this aspect.

For example, the carrier frequency band corresponding to any signal in embodiments of the present application can include, but is not limited to, an operating frequency band corresponding to the signal and a subcarrier interval corresponding to the signal.

The down-conversion process involved in the embodiment of the present application is used to reduce the frequency of a high-frequency RF signal to zero frequency (also referred to as a baseband frequency). This facilitates a reduction in the sampling frequency, thereby decreasing the volume of data that needs to be processed. It should be understood that the down-conversion process involved in the embodiment of the present application can be part of an analog-to-digital conversion process. Of course, the analog-to-digital conversion process can also include other processing steps beyond down-conversion, which are not limited in the embodiment of the present application.

The PSS positioning process involved in the embodiment of the present application is used to identify a target PSS within the down-converted signal (also referred to as a candidate SSB signal), to facilitate performing processing such as blind frequency offset compensation process and frequency domain transformation process on the signals that follow the target PSS.

For ease of understanding, the following embodiment of this application introduces the Synchronization Signal Block (SSB) signal.

The SSB signal in embodiments of the present application carries many important functions, such as, carrying cell identities (IDs), achieving time-frequency synchronization, providing symbol-level frame timing indication, providing slot-level frame timing indication, supporting cell measurements, enabling beam signal strength measurement, and/or facilitating signal quality measurement.

As an example, the SSB signal can consist of a PSS, a Secondary Synchronization Signal (SSS), and a Physical Broadcast Channel (PBCH) signal, with the PSS being located at a front-end position of the SSB signal. The SSS and PSS are used to carry the cell ID, to achieve time-frequency synchronization, and to obtain a symbol-level timing. The SSS and PBCH signal can be used for measuring cell or beam signal strength and signal quality. The PBCH signal is used to indicate slot/frame timing, and to carry a main information block (MIB).

The blind frequency offset compensation process involved in the embodiment of the present application is used to select a blind frequency offset compensation value from a predefined set of blind frequency offset compensation values to perform blind frequency offset compensation on a signal to be processed. Since the range of the blind frequency offset compensation values can be freely set according to demands, this method can compensate for large frequency offsets down to small frequency offsets even under low signal-to-noise ratio conditions, so that it enables frequency compensation in scenarios with low signal-to-noise ratio and large frequency offsets.

For instance, the compensation range corresponding to the predefined set of blind frequency offset compensation values in the embodiment of the present application can be [-23KHz±△a, 23KHz±△a], where △a represents a frequency offset error.

The frequency domain transformation process involved in the embodiment of the present application is used to convert a time domain signal into a frequency domain signal. For example, the frequency domain transformation process in the embodiment of the present application can include, but is not limited to, Fast Fourier Transform (FFT).

In this step, the DAS near-end device can further determine, based on the carrier frequency band corresponding to the signal received through the air interface (also referred to as the first RF signal), a maximum value Lmax of the SSB index. Accordingly, an SSB index library can be obtained. Then one SSB index can be determined from the SSB index library to execute following step S202. The SSB index library contains all SSB indices from zero to the maximum value Lmax. For example, assuming that the maximum value of the SSB index is 3, the SSB index library contains: an SSB index of 0, an SSB index of 1, an SSB index of 2, and an SSB index of 3.

It should be understood that, the DAS near-end device can select at least one SSB index from the SSB index library to perform step S202 during the execution of the time-frequency synchronization method described in the embodiment of the present application.

Step S202: determining, based on the first frequency domain signal and the SSB index, a demodulation reference signal (DMRS) estimated frequency offset and a channel estimation matrix.

In this step, the DAS near-end device can determine a channel estimation matrix based on the first frequency domain signal and the SSB index determined in the aforementioned step S201, and then perform DMRS frequency offset estimation process based on the channel estimation matrix to obtain the DMRS estimated frequency offset. This allows for further correction of the blind frequency offset compensation process based on the DMRS estimated frequency offset, thereby improving the accuracy of frequency compensation under conditions of low signal-to-noise ratio and large frequency offsets.

Optionally, the DAS near-end device can determine a DMRS sequence based on the SSB index. Further, the DAS near-end device can use the DMRS sequence along with the first frequency domain signal to determine a channel estimation matrix. Finally, the DAS near-end device can determine the DMRS estimated frequency offset based on the channel estimation matrix.

In the implementation, the DAS near-end device can generate the DMRS sequence by extracting the lower three bits from the SSB index determined in the aforementioned step S201. Of course, the DMRS sequence can also be generated in other ways, which are not limited in the embodiment of the present application.

Further, the DAS near-end device can perform channel estimation based on the DMRS sequence and the first frequency domain signal determined in the aforementioned step S201, and the channel estimation matrix can then be determined. As an example, in the embodiment of the present application, the DAS near-end device can perform the channel estimation by employing the Least Square (LS) method, and of course, other methods can be used, and this application's embodiment does not impose specific limitations on the channel estimation method.

Further, the DAS near-end device can determine the DMRS estimated frequency offset based on the channel estimation matrix, where the DMRS estimated frequency offset is used as an accuracy correction for the blind frequency offset compensation value. A specific method for determining the DMRS estimated frequency offset can follow established techniques in the relevant technology, and it is not limited in the embodiment of the present application.

Of course, the DAS near-end device can alternatively determine, based on the first frequency domain signal and the SSB index, the Demodulation Reference Signal (DMRS) estimated frequency offset and the channel estimation matrix through other methods, which are not limited in the embodiment of the present application.

Step S203: determining an oscillator offset based on the DMRS estimated frequency offset and the blind frequency offset compensation value.

In this step, the DAS near-end device can determine the oscillator offset based on the DMRS estimated frequency offset determined in the aforementioned step S203 and the blind frequency offset compensation value. The blind frequency offset compensation value is a value selected from the predefined set of blind frequency offset compensation values in determining the first frequency domain signal in the aforementioned step S201.

For example, an oscillator in the embodiment of the present application can include a voltage-controlled oscillator. Correspondingly, the oscillator offset can include a voltage offset of the voltage-controlled crystal oscillator. Of course, if the oscillator adopts other forms than the voltage-controlled oscillator, the oscillator offset can correspondingly include other distinct offsets, and the embodiment of the present application does not impose specific limitations on this aspect.

In a possible implementation, the DAS near-end device can obtain a target frequency offset compensation value by summing the DMRS estimated frequency offset with the blind frequency offset compensation value. Furthermore, the DAS near-end device can determine an offset corresponding to the target frequency offset compensation value, based on a correspondence between frequency offset compensation values and offsets, as the oscillator offset. Here, the correspondence between frequency offset compensation values and offsets indicates a relationship between different frequency offset compensation values and corresponding offsets.

In another possible implementation, the DAS near-end device can determine an offset corresponding to both the DMRS estimated frequency offset and the blind frequency offset compensation value, based on a correspondence among estimated frequency offsets, frequency offset compensation values, and offsets, as the oscillator offset. The correspondence among estimated frequency offsets, frequency offset compensation values, and offsets indicates a relationship among different estimated frequency offsets, different frequency offset compensation values and corresponding offsets.

Step S204: determining a first time domain position difference between a PSS correlation peak and a system frame header based on the first frequency domain signal and the channel estimation matrix.

In this step, the DAS near-end device can perform a second data processing based on the first frequency domain signal and the channel estimation matrix to obtain a first time domain position difference between the PSS correlation peak and the system frame header. The second data processing can include: a channel equalization process, a process for obtaining frame information, and a process for determining a time domain position difference. The frame information can include, but is not limited to, system frame information and half-frame indication information. Of course, the second data processing can also include other processing steps, and the embodiment of the present application does not impose specific limitations on this aspect.

The PSS correlation peak involved in the embodiment of the present application refers to a corresponding PSS correlation peak in sliding a correlation peak executed during the PSS positioning process in aforementioned step S201. It should be understood that a position of the PSS correlation peak can indicate a position of the target PSS. Since PSS is located at a front-end position of the SSB signal, the position of the target PSS can also indicate a position of a corresponding SSB signal. Therefore, the first time domain position difference between the PSS correlation peak and the system frame header can also be referred to as a first time domain position difference between the SSB signal and the system frame header.

The channel equalization process involved in the embodiment of the present application enables a signal obtained by the process to be more approximate to an initial signal transmitted by a signal transmitter.

The process for obtaining frame information involved in the embodiment of the present application is designed to obtain frame information. The process for determining the time domain position difference involved in the embodiment of the present application uses the obtained frame information to determine the first time domain position difference.

Step S205: performing time-frequency synchronization based on the oscillator offset and the first time domain position difference.

In this step, the DAS near-end device can perform frequency synchronization based on the oscillator offset determined in aforementioned step 203, and perform time synchronization based on the first time domain position difference determined in aforementioned step S204. It is evident that, in the embodiment of the present application, time-frequency synchronization of the DAS device is achieved in way of software.

In the embodiment of the present application, the first frequency domain signal and the SSB index are determined based on the carrier frequency band corresponding to the signal received by the DAS near-end device. The DMRS estimated frequency offset and the channel estimation matrix are determined based on the first frequency domain signal and the SSB index. Furthermore, the oscillator offset is determined based on the DMRS estimated frequency offset and the blind frequency offset compensation value. The first time domain position difference between the PSS correlation peak and the system frame header is determined based on the first frequency domain signal and the channel estimation matrix. Moreover, time-frequency synchronization process is performed based on the oscillator offset and the first time domain position difference. In summary, in the embodiment of the present application, data processing is performed based on the carrier frequency band corresponding to the signal received by the DAS near-end device, to determine the DMRS estimated frequency offset, the blind frequency offset compensation value, and the first time domain position difference between the PSS correlation peak and the system frame header. The oscillator offset is determined based on the DMRS estimated frequency offset and the blind frequency offset compensation value. Time-frequency synchronization processing is performed based on the oscillator offset and the first time domain position difference. It is evident that, compared with traditional technologies that utilize hardware synchronization circuits, the embodiment of the present application realizes time-frequency synchronization of the DAS device through software methods, which can eliminate the need for additional hardware synchronization circuits and is beneficial for saving the product costs of the DAS devices. Moreover, the method of the frequency synchronization by combining the DMRS estimated frequency offset and the blind frequency offset compensation value can improve the accuracy of the frequency compensation in scenarios with low signal-to-noise ratio and large frequency offsets. In addition, low-complexity frame synchronization can be achieved by time synchronization using the first time domain position difference between the PSS correlation peak and the system frame header.

FIG. 3 shows another schematic flowchart of the time-frequency synchronization method in an embodiment of the present application. On the basis of the aforementioned embodiment, relevant contents about performing time-frequency synchronization based on the oscillator offset and the first time domain position difference in aforementioned step S205 are described in the embodiment of the present application. As shown in FIG. 3, the method according to the embodiment of the present application can include following steps.

Step S301: performing frequency synchronization on oscillator parameters of the DAS near-end device based on the oscillator offset.

In this step, the DAS near-end device can adjust the oscillator parameters of the DAS near-end device based on the oscillator offset for performing frequency synchronization. This adjustment helps to effectively minimize frequency offset resulting from differences in oscillators between the transmitter and the receiver.

Step S302: performing time synchronization based on the first time domain position difference and a second time domain position difference.

The second time domain position difference in the embodiment of the present application can be defined as the temporal distance between the PSS correlation peak and a local frame tail of the DAS near-end device.

It should be noted that, upon detecting a PSS correlation peak, the DAS near-end device can record the time domain position difference between the PSS correlation peak and the local frame tail of the DAS near-end device. It is understood that the DAS near-end device can generate a free-running frame header (also referred to as a local frame header) at a predefined time interval. Each interval between two successive free-running frame headers forms one local frame. The frame header of a next local frame aligns with the frame tail of the immediately preceding local frame (also referred to as the local frame tail).

In this step, the DAS near-end device can perform time synchronization by comparing a sum of the first time domain position difference and the second time domain position difference with a predefined time length. For example, the predefined time length in the embodiment of the present application can be determined based on a half-frame length of a system frame.

Optionally, the DAS near-end device can sum the first time domain position difference and the second time domain position difference to obtain a sum of the differences. If the sum of the differences is consistent with the predefined time length, the DAS near-end device can determine that the local frame header of the DAS near-end device is aligned with the system frame header. If the sum of the differences is inconsistent with the predefined time length, the DAS near-end device can adjust the position of the local frame header based on a difference between the sum of the differences and the predefined time length. By such adjustment, the local frame header can be aligned with the system frame header, which achieves time synchronization.

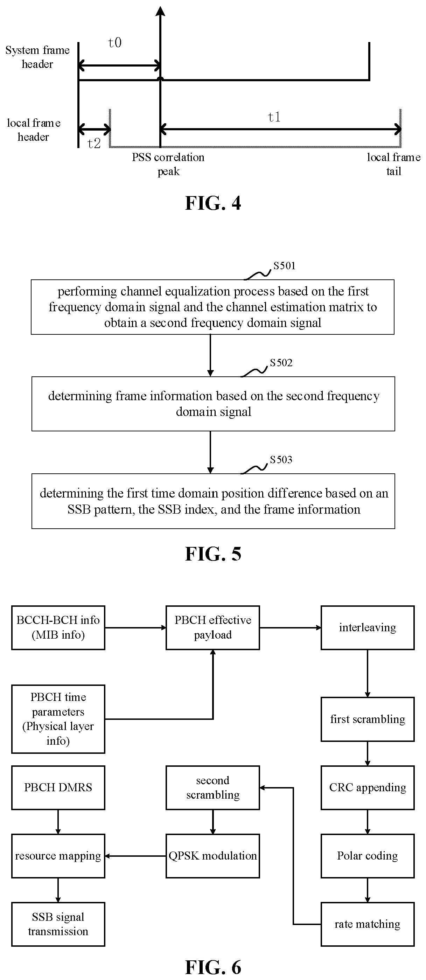

FIG. 4 schematically shows the PSS correlation peak, the system frame header, the local frame header, and the local frame tail according to an embodiment of the present application. As shown in FIG. 4, a first time domain position difference between the PSS correlation peak and the system frame header is t0, and a second time domain position difference between the PSS correlation peak and the local frame tail of the DAS near-end device is t1. If the sum (denoted as t') of the first time domain position difference t0 and the second time domain position difference t1 is equal to the predefined time length, the DAS near-end device can determine that the local frame header is aligned with the system frame header. If the sum t' is not equal to the predefined time length, the DAS near-end device can adjust the position of the local frame header based on a discrepancy t2 between the sum t' of the differences and the time length. By such adjustment, the local frame header can be aligned with the system frame header.

It is understood that, the first time domain position difference, the second time domain position difference, and the predefined time length in the embodiment of the present application can all be represented in terms of data points.

In the embodiment of the present application, by performing frequency synchronization on oscillator parameters of the DAS near-end device based on the oscillator offset, it is possible to effectively reduce the frequency offset caused by differences in oscillators between the transmitter and the receiver. In addition, low-complexity frame synchronization can be achieved by using the first time domain position difference and the second time domain position difference for time synchronization.

FIG. 5 shows another schematic flowchart of the time-frequency synchronization method in an embodiment of the present application. On the basis of aforementioned embodiments, relevant contents about determining the first time domain position difference between the PSS correlation peak and the system frame header in aforementioned step S204 are described in the embodiment of the present application. As shown in FIG. 5, the method according to the embodiment of the present application can include following steps.

Step S501: performing channel equalization process based on the first frequency domain signal and the channel estimation matrix to obtain a second frequency domain signal.

In this step, the DAS near-end device can, based on the first frequency domain signal and the channel estimation matrix, perform channel equalization process using an equalization algorithm to obtain the second frequency domain signal. As a result, the second frequency domain signal obtained through the channel equalization process is much closer to the initial signal transmitted by the signal transmitter. The equalization algorithm can include: Zero Forcing (ZF) equalization algorithm, Minimum Mean Square Error (MMSE), or Maximum Likelihood Sequence Estimation (MLSE).

Of course, the DAS near-end device can also utilize other equalization algorithms for channel equalization process based on the first frequency domain signal and the channel estimation matrix, and the embodiment of the present application does not impose specific limitations on the equalization algorithm.

It is noted that the DAS near-end device, by performing channel equalization process based on the first frequency domain signal and the channel estimation matrix, which also yields a signal-to-noise ratio (SNR) of the first frequency domain signal.

If the SNR is below a predefined SNR threshold, the DAS near-end device can update the SSB index from the SSB index library and return to the aforementioned step S202 to perform the step of determining the DMRS estimated frequency offset and the channel estimation matrix based on the first frequency domain signal and the updated SSB index. It should be understood that updating the SSB index means reselecting one SSB index from the SSB index library.

If the SNR is greater than or equal to the SNR threshold, the DAS near-end device can perform following step S502, where it determines frame information based on the second frequency domain signal.

Step S502: determining frame information based on the second frequency domain signal.

In this step, the DAS near-end device can determine frame information based on the second frequency domain signal. The frame information can include system frame information and half-frame indication information. The system frame information is used for indicating a System Frame Number (SFN) corresponding to a resource used for transmitting the SSB signal (also referred to as the SSB signal). The half-frame indication information is used to indicate whether the SSB signal is located in former half-frame or latter half-frame of the system frame. Of course, the frame information can also include other information, and the embodiment of the present application does not impose specific limitation on this aspect.

Optionally, the DAS near-end device decodes the second frequency domain signal to obtain the Master Information Block (MIB) information and physical layer information, and then retrieves the frame information based on the MIB information and the physical layer information.

FIG. 6 shows a schematic flow of PBCH processing according to an embodiment of the present application. As shown in FIG. 6, a signal transmitter obtains a PBCH effective payload based on Broadcast Control Channel (BCCH)-BCH information and PBCH time parameters. Furthermore, the signal transmitter sequentially processes the PBCH effective payload through a series of steps: interleaving, first scrambling, Cyclic Redundancy Check (CRC) code appending, Polar coding, rate matching, second scrambling, Quadrature Phase Shift Keying (QPSK) modulation, and resource mapping to generate an SSB signal, which is then transmitted.

In the embodiment of the present application, the DAS near-end device obtains the MIB information and the physical layer information by performing a corresponding decoding process on the second frequency domain signal. The decoding process includes, but is not limited to, at least one of the following: PBCH decoding, descrambling, QPSK demodulation, rate matching decoding, Polar code decoding, and CRC decoding.

Furthermore, the MIB information can include part of the System Frame Number (SFN), while the physical layer information can include the half-frame indication information and another part of the SFN. As a result, the DAS near-end device can determine the system frame information based on both the MIB information and the physical layer information, as well as it can determine the half-frame indication information based solely on the physical layer information.

Of course, the DAS near-end device can determine other information based on the MIB information and the physical layer information, and the embodiment of the present application does not impose specific limitation on this.

Furthermore, if an error occurs during the decoding of the second frequency domain signal, the DAS near-end device can update the SSB index from the SSB index library, and return to aforementioned step S202. In step S202, the DAS near-end device determines the DMRS estimated frequency offset and the channel estimation matrix based on the first frequency domain signal and the updated SSB index.

It is to be noted that if errors still occur during the decoding of the second frequency domain signal after updating all SSB indices from the SSB index library (i.e., traversing all SSB indices in the SSB index library results in errors in decoding the second frequency domain signal), the DAS near-end device can update the blind frequency offset compensation value, and return to aforementioned step S203. In step S203, the DAS near-end device determine the oscillator offset based on the DMRS estimated frequency offset and the updated blind frequency offset compensation value.

Step S503: determining the first time domain position difference based on an SSB pattern, the SSB index, and the frame information.

In this step, the DAS near-end device can determine the first time domain position difference between the PSS correlation peak and the system frame header based on the SSB pattern, the SSB index determined in aforementioned step S201, and the frame information determined in aforementioned step S502. Here, the SSB pattern can be identified by the DAS near-end device based on the carrier frequency band corresponding to the first RF signal.

For example, the DAS near-end device can determine the SSB pattern corresponding to the carrier frequency band of the first RF signal by querying a predefined relationship between carrier frequency bands and SSB patterns. The predefined relationship between carrier frequency bands and SSB patterns indicates which SSB pattern corresponds to each carrier frequency band.

Optionally, the DAS near-end device determines the time domain information of the SSB signal based on the SSB pattern, the SSB index, and the frame information, and determines the first time domain position difference by using this time domain information. The time domain information includes a time slot and symbols corresponding to the SSB signal.

The SSB pattern in the embodiment of the present application is used to indicate the distribution position of the SSB signal in time domain. The SSB index is used for indicating the symbol position of the SSB signal within a half-frame. For example, symbols in the embodiment of the present application can be OFDM symbols.

In the embodiment of the present application, the DAS near-end device can determine system frame information and half-frame indication information where the SSB signal is located based on the frame information. Furthermore, according to the SSB pattern and the SSB index, the DAS near-end device can determine the time slot and symbols corresponding to the SSB signal within the time domain position indicated by the system frame information and the half-frame indication information.

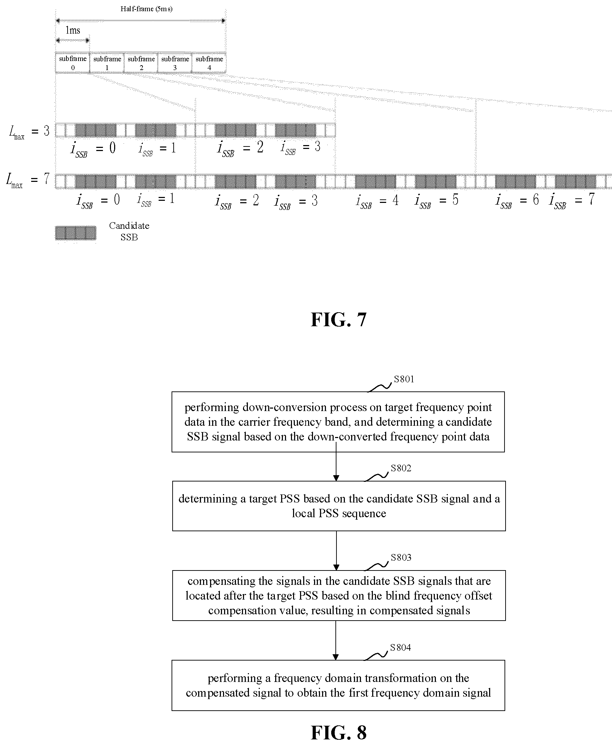

FIG. 7 is a schematic diagram of an SSB pattern according to an embodiment of the present application. For ease of understanding, it is exemplarily illustrated in FIG. 7 with a subcarrier spacing of 15 KHz and an SSB pattern of CaseA. As shown in FIG. 7, assuming that the SSB pattern is CaseA and the SSB index I_{SSB} is 0, the DAS near-end device can determine, based on the SSB pattern and the SSB index, that the SSB signal is located in subframe 0 (i.e., time slot 0 in time domain) and symbols of the SSB signal in time domain include a third symbol to a sixth symbol. It should be understood that when the subcarrier spacing is 15 KHz, one system frame includes 10 subframes, one subframe is equal to one time slot, and one time slot includes 14 OFDM symbols.

Further, considering that the position of the PSS correlation peak can indicate the position of the corresponding SSB signal, the DAS near-end device can determine a first time domain position difference between the SSB signal and the system frame header based on the time slot and symbols corresponding to the SSB signal. This first time domain position difference is also the time difference between the PSS correlation peak and the system frame header.

In the embodiment of the present application, the DAS near-end device obtains the second frequency domain signal by performing channel equalization process based on the first frequency domain signal and the channel estimation matrix. Then the DAS near-end device determines frame information based on the second frequency domain signal. Furthermore, the DAS near-end device determines the first time domain position difference between the PSS correlation peak and the system frame header based on the SSB pattern, the SSB index, and the frame information. This facilitates the DAS near-end device to perform time synchronization based on the first time domain position difference.

FIG. 8 shows another schematic flowchart of the time-frequency synchronization method according to an embodiment of the present application. On the basis of aforementioned embodiments, relevant contents about determining the first frequency domain signal in aforementioned step S201 are described in the embodiment of the present application. As shown in FIG. 8, the method according to the embodiment of the present application can include following steps.

Step S801: performing down-conversion process on target frequency point data in the carrier frequency band, and determining a candidate SSB signal based on the down-converted frequency point data.

In this step, the DAS near-end device can down-convert the target frequency point data from the carrier frequency band. The target frequency point data can be one piece of candidate SSB frequency point data selected from the carrier frequency band, or it can be any piece of frequency point data selected from the carrier frequency band.

Optionally, the DAS near-end device can perform down-conversion process on the target frequency point data, effectively shifting the target frequency point data to zero frequency. This facilitates reducing the sampling frequency, thereby decreasing the volume of data that needs to be processed. For example, in the embodiment of the present application, by means of the down-conversion process, the sampling frequency can be reduced from 122.88M to 7.68M. Correspondingly, the number of sampled data points can be reduced from 4096 to 256, thus significantly lowering the quantity of sampled data that need to be processed.

Furthermore, the DAS near-end device can perform filtering on the down-converted frequency point data. Through filtering, frequency point data located within a predefined range around zero frequency can be identified as the candidate SSB signal.

It is understood that, after the first time domain position difference between the PSS correlation peak and the system frame header has been determined based on the first frequency domain signal and channel estimation matrix in aforementioned step S204, the DAS near-end device can determine the candidate SSB signal as an SSB signal.

Step S802: determining a target PSS based on the candidate SSB signal and a local PSS sequence.

In the embodiment of the present application, multiple groups (e.g., 3 groups) of local PSS sequences can be predefined in the DAS near-end device. Each group of local PSS sequence corresponds to an intra-group identifier (ID) for cell. Different groups of PSS sequences correspond to different intra-group IDs for cell. For example, there can be predefined in the DAS near-end device local PSS sequence 0, local PSS sequence 1, and local PSS sequence 2. Local PSS sequence 0 corresponds to intra-group identifier for cell ID0, where local PSS sequence 1 corresponds to intra-group identifier for cell ID1, local PSS sequence 2 corresponds to intra-group identifier for cell ID2.

In this step, the DAS near-end device can perform sliding a correlation peak based on the candidate SSB signal and the local PSS sequence, to determine as the target PSS any of the candidate SSB signals that produce a correlation peak magnitude with the local PSS sequences exceeding a first preset threshold. It is understood that the candidate SSB signal and the local PSS sequence generate correlation peaks at synchronization points.

For example, assuming that the correlation peak magnitude between the candidate SSB signal and local PSS sequence 0 exceeds the first predefined threshold, the DAS near-end device can determine the candidate SSB signal with a correlation peak magnitude exceeding this threshold relative to the local PSS sequence 0 as a target PSS.

For example, the DAS near-end device can use a local peak-to-average ratio algorithm for sliding a correlation peak. Of course, other algorithms can also be used for sliding a correlation peak, and the embodiment of the present application does not impose specific limitations on this.

Furthermore, the DAS near-end device, after determining the target PSS, can also determine an intra-group identifier for cell corresponding to the target PSS, which facilitates the DAS near-end device to determine the cell ID.

For example, assuming that a correlation peak magnitude between the candidate SSB signal and local PSS sequence 0 exceeds the first predefined threshold, the DAS near-end device can determine that the intra-group identifier for cell ID0 corresponding to local PSS sequence 0 is an intra-group identifier for cell corresponding to the target PSS.

Step S803: compensating the signals in the candidate SSB signals that are located after the target PSS based on the blind frequency offset compensation value, resulting in compensated signals.

In this step, the DAS near-end device can perform blind frequency offset compensation process on the signals in the candidate SSB signal that are located after the target PSS based on the blind frequency offset compensation value to obtain the compensated signals. The blind frequency offset compensation value can be selected by the DAS near-end device from a predefined set of blind frequency offset compensation values.

Step S804: performing a frequency domain transformation on the compensated signal to obtain the first frequency domain signal.

In this step, the DAS near-end device can perform a frequency domain transformation process on the compensated signal obtained in aforementioned step S803 to obtain the first frequency domain signal. This facilitates the DAS near-end device to determine, based on the first frequency domain signal, the oscillator offset and the first time domain position difference between the PSS correlation peak and the system frame header.

In the embodiment of the present application, the DAS near-end device can determine the candidate SSB signal based on the down-converted frequency point data obtained from the target frequency point data in the carrier frequency band. It then identifies the target PSS signal based on the candidate SSB signal and the local PSS sequence. Furthermore, it compensates for the signals in the candidate SSB signals that are located after the target PSS signal using a blind frequency offset compensation value to obtain the compensated signals. The device performs a frequency domain transformation on the compensated signals to obtain the first frequency domain signal, which facilitates the DAS near-end device to determine the oscillator offset and the first time domain position difference between the PSS correlation peak and the system frame header based on the first frequency domain signal. Hence, the device can perform time-frequency synchronization processing based on the oscillator offset and the first time domain position difference.

Furthermore, on the basis of the aforementioned embodiment, the DAS near-end device can further determine a cell group ID based on the first frequency domain signal and a local SSS sequence, and determine a cell ID based on the cell group ID and the intra-group identifier for cell corresponding to the target PSS.

In an embodiment of the present application, multiple sets (e.g., 336 sets) of local SSS sequences can be predefined in the DAS near-end device. Each set of local SSS sequences corresponds to one cell group ID. Different sets of SSS sequences correspond to distinct cell group IDs. For example, there can be predefined in the DAS near-end device local SSS sequence 0, local SSS sequence 1, ..., local SSS sequence 335. Here, local SSS sequence 0 corresponds to cell group ID0, local SSS sequence 1 corresponds to cell group ID1, ..., and local SSS sequence 335 corresponds to cell group ID335.

In the embodiment of the present application, the DAS near-end device can perform sliding a correlation peak based on the first frequency domain signal and the local SSS sequence, to determine as a target SSS that produce a correlation peak magnitude with the local SSS sequences exceeding a second preset threshold. Additionally, the DAS near-end device determines the cell group ID corresponding to the target SSS. It is understood that the first frequency domain signal and the local SSS sequences will generate correlation peaks at synchronization points.

For example, assuming that the correlation peak magnitude between the first frequency domain signal and local SSS sequence 150 exceeds the second predefined threshold, the DAS near-end device can determine that the signal in the first frequency domain signal which produces a correlation peak magnitude exceeding this threshold relative to the local SSS sequence 150 is the target SSS. In addition, the DAS near-end device determines cell group ID 150 corresponding to local SSS sequence 150 as the cell group ID corresponding to the target SSS.

Furthermore, the DAS near-end device can determine the cell ID based on the cell group ID corresponding to the target SSS and the intra-group identifier for cell corresponding to the target PSS. The cell ID is used for channel estimation and/or decoding. It is noted that when performing channel estimation, the DAS near-end device can determine an initial DMRS sequence carried in the first frequency domain signal based on the cell ID. The device then compares the initial DMRS sequence with a locally generated DMRS sequence, facilitating channel estimation.

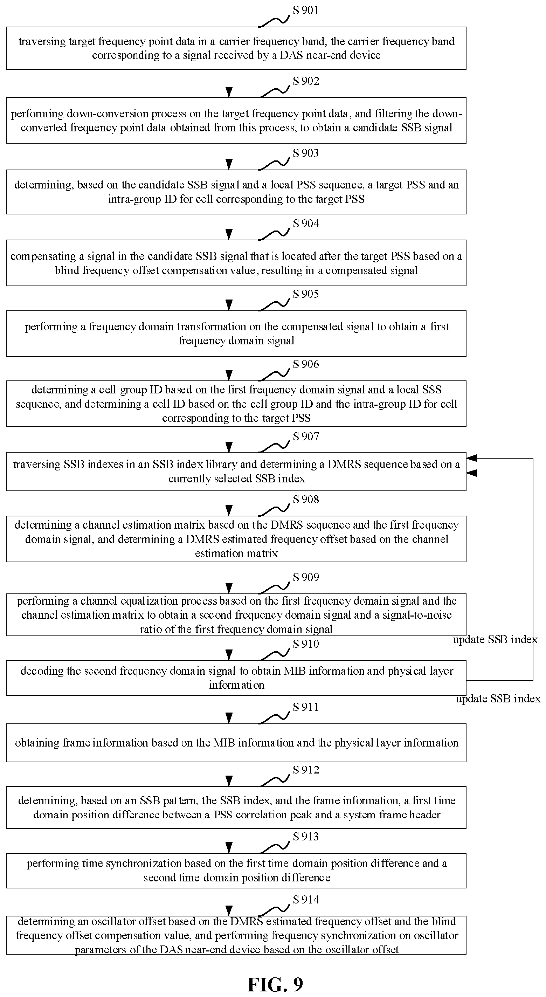

FIG. 9 shows another schematic flowchart of the time-frequency synchronization method according to an embodiment of the present application. On the basis of the aforementioned embodiments, the overall flow of the time-frequency synchronization method is described in the embodiment of the present application. As shown in FIG. 9, the method of the embodiment of the present application can include following steps.

Step S901: traversing target frequency point data in a carrier frequency band, the carrier frequency band corresponding to a signal received by a DAS near-end device.

The target frequency point data can be one piece of candidate SSB frequency point data selected from the carrier frequency band, or can be any piece of frequency point data selected from the carrier frequency band.

Step S902: performing down-conversion process on the target frequency point data, and filtering the down-converted frequency point data obtained from this process, to obtain a candidate SSB signal.

Step S903: determining, based on the candidate SSB signal and a local PSS sequence, a target PSS and an intra-group identifier for cell corresponding to the target PSS.

Step S904: compensating a signal in the candidate SSB that is located after the target PSS based on a blind frequency offset compensation value, resulting in a compensated signal.

The blind frequency offset compensation value can be selected by the DAS near-end device from a predefined set of blind frequency offset compensation values.

Step S905: performing a frequency domain transformation on the compensated signal to obtain a first frequency domain signal.

Step S906: determining a cell group ID based on the first frequency domain signal and a local SSS sequence, and determining a cell ID based on the cell group ID and the intra-group identifier for cell corresponding to the target PSS.

Step S907: traversing SSB indices in an SSB index library and determining a DMRS sequence based on a currently selected SSB index.

The SSB index library is obtained based on a maximum value of SSB index. The maximum value of SSB index is determined based on a carrier frequency band corresponding to a first RF signal.

Step S908: determining a channel estimation matrix based on the DMRS sequence and the first frequency domain signal, and determining a DMRS estimated frequency offset based on the channel estimation matrix.

Step S909: performing a channel equalization process based on the first frequency domain signal and the channel estimation matrix to obtain a second frequency domain signal and a signal-to-noise ratio (SNR) of the first frequency domain signal.

If the SNR is greater than or equal to a predefined SNR threshold, then proceed to step S910. If the SNR is less than the predefined SNR threshold, return to aforementioned step S907 to performs the step of traversing another SSB index in the SSB index library (i.e., update the SSB index) and determine the DMRS sequence based on a currently selected SSB index.

Step S910: decoding the second frequency domain signal to obtain MIB information and physical layer information.

It is understood that if the decoding is successful, step S911 can be performed. If an error occurs during decoding, return to aforementioned step S907 to traverse another SSB index in the SSB index library (i.e., update the SSB index) and determine the DMRS sequence based on a currently selected SSB index.

It is to be noted that after traversing all SSB indices in the SSB index library , if the SNR of the first frequency domain signal obtained from the channel equalization process is still less than the predefined SNR threshold, or if errors occur during the decoding of the second frequency domain signal, then another blind frequency offset compensation value can be selected from the predefined set of blind frequency offset compensation values(i.e., update the blind frequency offset compensation value) and return to aforementioned step S904 which involves compensating for the signals in the candidate SSB signal that are located after the target PSS based on the updated blind frequency offset compensation value.

Assuming that the system frequency offset is relatively large, after compensating with a smaller blind frequency offset compensation value, decoding may still fail. In this situation, it is necessary to increase the blind frequency offset compensation value until the decoding is successful. In addition, it is possible to lock the blind frequency offset compensation value for subsequent blind compensation, but the lock can be released when decoding fails again in the future.

It should be noted that, if after traversing all blind frequency offset compensation values in the predefined set of blind frequency offset compensation values, and errors occur during decoding of the second frequency domain signal, then returns to the aforementioned step S901 which involves traversing another target frequency point data (i.e., update the target frequency point data) in the carrier frequency band.

Step S911: obtaining frame information based on the MIB information and the physical layer information.

The frame information can include system frame information and half-frame indication information.

Step S912: determining, based on an SSB pattern, the SSB index, and the frame information, a first time domain position difference between a PSS correlation peak and a system frame header.

The SSB pattern can be determined by the DAS near-end device based on the carrier frequency band corresponding to the first RF signal.

Step S913: performing time synchronization based on the first time domain position difference and a second time domain position difference.

The second time domain position difference can be defined as the temporal distance between the PSS correlation peak and a local frame tail of the DAS near-end device.

Step S914: determining an oscillator offset based on the DMRS estimated frequency offset and the blind frequency offset compensation value, and performing frequency synchronization on oscillator parameters of the DAS near-end device based on the oscillator offset.

For example, the aforementioned step S901 in the embodiment of the present application can be performed by a control unit in the DAS near-end device. The aforementioned steps S902, S903 and S913 can be performed by an FPGA (Field-Programmable Gate Array) in the DAS near-end device. The aforementioned step S904-S912 can be performed by a processor in the DAS near-end device. The step of determining the oscillator offset can be performed by the processor. The step of frequency synchronizing the oscillator parameters of the DAS near-end device based on the oscillator offset can be performed by the FPGA.

Of course, the aforementioned steps can also be performed by other units in the DAS near-end device, and the embodiment of the present application does not impose specific limitations on this.

It is understood that implementation of the steps in the embodiment of the present application can be refer to related contents in the aforementioned embodiments of the present application, and therefore will not be repeated herein.

In summary, in the embodiment of the present application, by performing data processing based on the carrier frequency band corresponding to the signal, the DMRS estimated frequency offset, the blind frequency offset compensation value, and the first time domain position difference between the PSS correlation peak and the system frame header are determined. The oscillator offset is determined based on the DMRS estimated frequency offset and the blind frequency offset compensation value. Then, the time-frequency synchronization is performed based on the oscillator offset and the first time domain position difference. It is evident that, compared with traditional methods that utilize hardware synchronization circuits, the embodiment of the present application can achieve accurate time-frequency synchronization of the DAS device even under low signal-to-noise ratio and large frequency offsets through a software approach, which can not only helps reduce the product costs for the DAS devices, but also facilitate easier integration and iteration of new technologies in the future.

It is understandable that although the individual steps in the flowcharts involved in the embodiments as described above are shown sequentially as indicated by the arrows, these steps are not necessarily executed sequentially in the order indicated by the arrows. Unless expressly stated herein, there is no strict order limitation on the execution of these steps. These steps can be executed in other orders. Moreover, at least a portion of the steps in the flowchart involved in the embodiments as described above can include multiple steps or multiple phases, which are not necessarily executed and completed simultaneously, but can be executed at different time. In addition, the order in which these steps or phases are executed is not necessarily sequential, but they can be performed in turn or alternately with at least a portion of the other steps or of at least a portion of the steps or phases in the other steps.

Based on the same inventive concept, an embodiment of the present application further provides a time-frequency synchronization apparatus for implementing the aforementioned time-frequency synchronization method. The implementation scheme provided by the device for solving the problem is similar to the implementation scheme recited in the aforementioned method, so specific limitations in one or more embodiments provided below directed to the time-frequency synchronization apparatus can be referred to the limitations for the time-frequency synchronization method in the abovementioned embodiments, and will not be repeated herein.

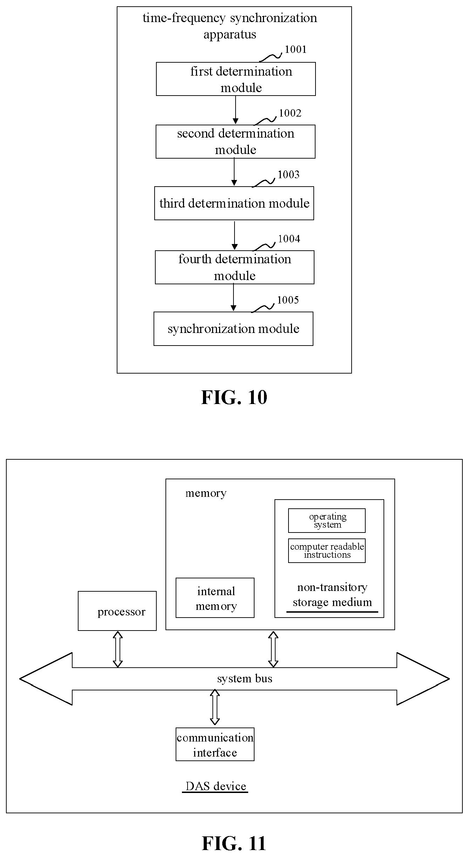

FIG. 10 shows a schematic diagram of a structure of the time-frequency synchronization apparatus according to an embodiment of the present application. As shown in FIG. 10, the time-frequency synchronization apparatus according to the embodiment of the present application can be applied in a DAS device. The time-frequency synchronization apparatus can include: a first determination module 1001, a second determination module 1002, a third determination module 1003, a fourth determination module 1004, and a synchronization module 1005.

The first determination module 1001 is configured to determine a first frequency domain signal and synchronization signal block (SSB) index based on a carrier frequency band corresponding to a signal received by a DAS near-end device.

The second determination module 1002 is configured to determine a demodulation reference signal (DMRS) estimated frequency offset and a channel estimation matrix based on the first frequency domain signal and the SSB index.

The third determination module 1003 is configured to determine an oscillator offset based on the DMRS estimated frequency offset and a blind frequency offset compensation value.

The fourth determination module 1004 is configured to determine a first time domain position difference between a primary synchronization signal (PSS) correlation peak and a system frame header based on the first frequency domain signal and the channel estimation matrix.

The synchronization module 1005 is configured to perform time-frequency synchronization processing based on the oscillator offset and the first time domain position difference.

In an embodiment, the fourth determination module 1004 includes:

an equalization unit, configured to perform a channel equalization process based on the first frequency domain signal and the channel estimation matrix to obtain a second frequency domain signal;

a first determination unit, configured to determine frame information based on the second frequency domain signal, the frame information including system frame information and half-frame indication information; and

a second determination unit, configured to determine the first time domain position difference based on an SSB pattern, an SSB index, and the frame information, the SSB pattern being determined based on the carrier frequency band.

In an embodiment, the first determination unit is specifically configured to:
decode the second frequency domain signal to obtain MIB information and physical layer information; and
obtain the frame information based on the MIB information and the physical layer information.

In an embodiment, the apparatus further includes:
a first update module, configured to update the SSB index from an SSB index library if there is an error occurs during the decoding of the second frequency domain signal, and returning to the second determination module 1002 to performs the step of determining a DMRS estimated frequency offset and a channel estimation matrix based on the first frequency domain signal and the updated SSB index.

In an embodiment, the apparatus further includes:
a second update module, configured to update the blind frequency offset compensation value if errors still occurs during the decoding of the second frequency domain signal after all SSB indices in the SSB index library have been updated, and return to the third determining module 1003 to perform the step of determining an oscillator offset based on the DMRS estimated frequency offset and the updated blind frequency offset compensation value.

In an embodiment, the second determination unit is specifically configured to:
determine time domain information of the SSB signal based on the SSB pattern, the SSB index and the frame information, the time domain information including a time slot and symbols corresponding to the SSB signal; and
determine the first time domain position difference based on the time domain information of the SSB signal.

In an embodiment, the equalization unit is further configured to: perform the channel equalization processing based on the first frequency domain signal and the channel estimation matrix, which also yields a signal-to-noise ratio (SNR) of the first frequency domain signal.

The apparatus also includes:
a third update module, configured to update the SSB index from the SSB index library if the SNR is less than a predefined SNR threshold, and return to the second determination module 1002 to perform the step of determining a DMRS estimated frequency offset and a channel estimation matrix based on the first frequency domain signal and the updated SSB index;
if the SNR is greater than or equal to the SNR threshold, the first determination unit performs the step of determining the frame information based on the second frequency domain signal.

In an embodiment, the synchronization module 1005 includes:
a first synchronization unit, configured to perform frequency synchronization on oscillator parameters of the DAS near-end device based on the oscillator offset; and
a second synchronization unit, configured to perform time synchronization based on the first time domain position difference and a second time domain position difference; the second time domain position difference being defined as the temporal distance between the PSS correlation peak and a local frame tail of the DAS near-end device.

In an embodiment, the second synchronization unit is specifically configured to:
sum the first time domain position difference and the second time domain position difference to obtain a sum of the differences;
determine that a local frame header of the DAS near-end device is aligned with the system frame header if the sum of the differences is consistent with a predefined time length, the time length being determined based on a half-frame length of a system frame;
if the sum of the differences is inconsistent with the predefined time length, adjust a position of the local frame header based on a difference between the sum of differences and the predefined time length.

In an embodiment, the first determination module 1001 is specifically configured to:
perform down-conversion process on target frequency point data in the carrier frequency band, and determine a candidate SSB signals based on the down-converted frequency point data;
determine a target PSS based on the candidate SSB signal and a local PSS sequence;
compensate a signal that follows the target PSS in the candidate SSB signal based on the blind frequency offset compensation value, resulting in a compensated signal; and
perform a frequency domain transformation on the compensated signal to obtain the first frequency domain signal.

In an embodiment, the apparatus further includes:
a fifth determination module, configured to determine a cell group ID based on the first frequency domain signal and a local SSS sequence; and
a sixth determination module, configured to determine a cell ID based on the cell group ID and an intra-group identifier for cell corresponding to the target PSS, the cell ID being used for channel estimation and/or decoding.

In an embodiment, the second determination module 1002 is specifically configured to:
determine a DMRS sequence based on the SSB index;
determine the channel estimation matrix based on the DMRS sequence and the first frequency domain signal; and
determine the DMRS estimated frequency offset based on the channel estimation matrix.

The time-frequency synchronization apparatus according to embodiments of the present application can be utilized to perform the technical solution in the time-frequency synchronization method according to abovementioned embodiments of the present application. Realization principle and technical effect of the apparatus are similar to those of the method, so they are not repeated herein. Various modules in the above-described time-frequency synchronization apparatus can be implemented in whole or in part by software, hardware and combinations thereof. Each of the above modules can be embedded in or independent of a processor in the DAS device in hardware form, or can be stored in a memory in the DAS device in software form, so as to facilitate the processor to invoke the execution of the operations corresponding to the respective modules.

FIG. 11 shows a schematic diagram of a structure of a DAS device according to an embodiment of the present application, which can include, but is not limited to, a DAS near-end device. As shown in FIG. 11, the DAS device includes a processor, a memory, and a communication interface which are connected via a system bus. The processor of the DAS device is used for providing computing and control capabilities. The memory of the DAS device includes a non-transitory storage medium and an internal memory. The non-transitory storage medium stores an operating system and computer readable instructions. The internal memory provides an environment for the operation of the operating system and computer readable instructions in the non-transitory storage medium. The DAS device has a communication interface for communicating with an external device in a wired or wireless manner. The computer-readable instructions are executed by the processor to realize the technical solution in the time-frequency synchronization method according to abovementioned embodiments of the present application. Realization principle and technical effect of the computer-readable instructions are similar to those of the method, so they are not repeated herein.

It will be appreciated by those skilled in the art that the structure illustrated in FIG. 11, which is only a block diagram of a portion of the structure related to solution of the present application, does not constitute a limitation on the DAS device to which the solution of the present application is applied. The specific DAS device can include more or fewer components than those shown in FIG. 11, or certain components are combined, or components are deployed in a different way.

A DAS device is further provided according to an embodiment. The DAS device includes a memory and a processor. The memory stores computer-readable instructions. The processor executes the computer-readable instructions to realize the technical solution of the time-frequency synchronization method in the aforementioned embodiments of the present application. Realization principle and technical effect of the computer-readable instructions are similar to those of the method, so they are not repeated herein.

A computer-readable storage medium is further provided according to an embodiment. The computer-readable storage medium stores computer-readable instructions thereon. The computer-readable instructions are executed by a processor to realize the technical solution of the time-frequency synchronization method in the aforementioned embodiments of the present application Realization principle and technical effect of the computer-readable instructions are similar to those of the method, so they are not repeated herein.

A program product is further provided according to an embodiment. The program product includes computer-readable instructions which, when executed by a processor, realize the technical solution of the time-frequency synchronization method in the aforementioned embodiments of the present application. Realization principle and technical effect of the computer-readable instructions are similar to those of the method, so they are not repeated herein.

A person of ordinary skill in the art can understand that realizing all or part of the processes in the methods of the above embodiments is possible to be accomplished by computer-readable instructions to instruct the associated hardware, the computer-readable instructions being storable in a non-transitory computer-readable storage medium. The computer-readable instructions, when executed, can include a process such as the processes of the embodiments of the methods described above. Among other things, any reference to a memory, database, or other medium used in the embodiments provided in the application can include at least one of non-transitory and transitory memory. Non-transitory memory can include read-only memory (ROM), magnetic tape, floppy disk, flash memory, optical memory, high-density embedded non-transitory memory, resistive memory (ReRAM), magnetoresistive random access memory (MRAM), ferroelectric memory (ReRAM, magnetoresistive random access memory (MRAM), ferroelectric random access memory (FRAM), phase change memory (PCM), graphene memory and so on. The transitory memory can include random access memory (RAM) or external cache memory. As an illustration and not a limitation, the RAM can be in various forms, such as static random access memory (SRAM) or dynamic random access memory (DRAM), and the like. The processors involved in the embodiments provided in the present application can be general-purpose processors, central processing units, graphics processors, digital signal processors, programmable logics, data processing logics based on quantum computing, and the like, which are not limited.

## Claims

1. A time-frequency synchronization method, **characterized by** comprising;
determining a first frequency domain signal and a synchronization signal block, SSB, index based on a carrier frequency band corresponding to a signal received by a distributed antenna system, DAS, near-end device;
determining a demodulation reference signal, DMRS, estimated frequency offset and a channel estimation matrix based on the first frequency domain signal and the SSB index;
determining an oscillator offset based on the DMRS estimated frequency offset and a blind frequency offset compensation value;
determining a first time domain position difference between a primary synchronization signal, PSS, correlation peak and a system frame header based on the first frequency domain signal and the channel estimation matrix; and
performing time-frequency synchronization processing based on the oscillator offset and the first time domain position difference.

2. The time-frequency synchronization method according to claim 1, wherein determining the first time domain position difference between the PSS correlation peak and the system frame header based on the first frequency domain signal and the channel estimation matrix comprises:
performing a channel equalization process based on the first frequency domain signal and the channel estimation matrix to obtain a second frequency domain signal;
determining frame information based on the second frequency domain signal, the frame information comprising system frame information and half-frame indication information; and
determining the first time domain position difference based on an SSB pattern, the SSB index and the frame information, wherein the SSB pattern is determined based on the carrier frequency band.

3. The time-frequency synchronization method according to claim 2, wherein determining the frame information based on the second frequency domain signal comprises:
decoding the second frequency domain signal to obtain main information block, MIB, information and physical layer information; and
obtaining the frame information based on the MIB information and the physical layer information.

4. The time-frequency synchronization method according to claim 3, further comprising:
in a case that an error occurs during the decoding of the second frequency domain signal, updating the SSB index from an SSB index library and returning to determine a DMRS estimated frequency offset and a channel estimation matrix based on the first frequency domain signal and the updated SSB index.

5. The time-frequency synchronization method according to claim 4, further comprising:
in a case that errors still occur during the decoding of the second frequency domain signal after all SSB indices in the SSB index library have been updated, updating the blind frequency offset compensation value and returning to determine an oscillator offset based on the DMRS estimated frequency offset and the updated blind frequency offset compensation value.

6. The time-frequency synchronization method according to claim 2, wherein determining the first time domain position difference based on the SSB pattern, the SSB index and the frame information comprises:
determining time domain information of an SSB signal based on the SSB pattern, the SSB index, and the frame information, the time domain information comprising a time slot and symbols corresponding to the SSB signal; and
determining the first time domain position difference based on the time domain information of the SSB signal.

7. The time-frequency synchronization method according to claim 2, further comprising:
performing the channel equalization process based on the first frequency domain signal and the channel estimation matrix, which also yields a signal-to-noise ratio, SNR, of the first frequency domain signal;
in a case that the SNR is less than a predefined SNR threshold, updating the SSB index from an SSB index library and returning to determine an DMRS estimated frequency offset and a channel estimation matrix based on the first frequency domain signal and the updated SSB index; and
in a case that the SNR is greater than or equal to the predefined SNR threshold, performing the step of determining the frame information based on the second frequency domain signal.

8. The time-frequency synchronization method according to any one of claims 1 to 7, wherein performing time-frequency synchronization based on the oscillator offset and the first time domain position difference comprises:
performing frequency synchronization on oscillator parameters of the DAS near-end device based on the oscillator offset; and
performing time synchronization based on the first time domain position difference and a second time domain position difference, the second time domain position difference being defined as a temporal distance between the PSS correlation peak and a local frame tail of the DAS near-end device.

9. The time-frequency synchronization method according to claim 8, wherein performing time synchronization based on the first time domain position difference and the second time domain position difference comprises:
summing the first time domain position difference and the second time domain position difference to obtain a sum of the differences;
in a case that the sum of the differences is consistent with a predefined time length, determining that a local frame header of the DAS near-end device is aligned with the system frame header, the time length being determined based on a half-frame length of a system frame; and
in a case that the sum of the differences is inconsistent with the predefined time length, adjusting a position of the local frame header based on a difference between the sum of the differences and the predefined time length.

10. The time-frequency synchronization method according to any one of claims 1 to 7, wherein determining the first frequency domain signal based on the carrier frequency band corresponding to the signal received by the DAS near-end device comprises:
performing a down-conversion process on target frequency point data in the carrier frequency band and determining a candidate SSB signal based on the down-converted frequency point data;
determining a target PSS based on the candidate SSB signal and a local PSS sequence;
compensating a signal that follows the target PSS in the candidate SSB signal based on the blind frequency offset compensation value to obtain a compensated signal; and
performing a frequency domain transformation on the compensated signal to obtain the first frequency domain signal.

11. The time-frequency synchronization method according to claim 10, further comprising:
determining a cell group identifier, ID, based on the first frequency domain signal and a local SSS sequence; and
determining a cell ID based on the cell group ID and an intra-group identifier for cell corresponding to the target PSS, wherein the cell ID is used for at least one of channel estimation or decoding.

12. The time-frequency synchronization method according to any one of claims 1 to 7, wherein determining the DMRS estimated frequency offset and the channel estimation matrix based on the first frequency domain signal and the SSB index comprises:
determining a DMRS sequence based on the SSB index;
determining the channel estimation matrix based on the DMRS sequence and the first frequency domain signal; and
determining the DMRS estimated frequency offset based on the channel estimation matrix.

13. A time-frequency synchronization apparatus, **characterized by** comprising:
a first determination module, configured to determine a first frequency domain signal and a synchronization signal block, SSB, index based on a carrier frequency band corresponding to a signal received by a distributed antenna system, DAS, near-end device;
a second determination module, configured to determine a demodulation reference signal, DMRS, estimated frequency offset and a channel estimation matrix based on the first frequency domain signal and the SSB index;
a third determination module, configured to determine an oscillator offset based on the DMRS estimated frequency offset and a blind frequency offset compensation value;
a fourth determination module, configured to determine a first time domain position difference between a primary synchronization signal, PSS, correlation peak and a system frame header based on the first frequency domain signal and the channel estimation matrix; and
a synchronization module, configured to perform time-frequency synchronization processing based on the oscillator offset and the first time domain position difference.

14. A distributed antenna system, DAS, device, **characterized by** comprising a memory and one or more processors, wherein the memory stores computer-readable instructions, the computer-readable instructions, when executed by the one or more processors, causing the one or more processors to perform steps of the time-frequency synchronization method according to any one of claims 1 to 12.

15. A non-transitory computer-readable storage medium, storing computer-readable instructions thereon, **characterized in that** the computer-readable instructions, when executed by one or more processors, cause the one or more processors to perform steps of the time-frequency synchronization method according to any one of claims 1 to 12.

16. A program product, comprising computer-readable instructions, **characterized in that** the computer-readable instructions, when executed by a processor, implement steps of the time-frequency synchronization method according to any one of claims 1 to 12.
